# EUROPEAN PATENT APPLICATION

(11) **EP 2 023 067 A1**
(43) Date of publication of application: **11.02.2009**
(21) Application number: 07252941.5
(22) Date of filing: 25.07.2007
(51) Int. Cl.: F25J 3/06, F25J 3/04, B01D 53/00, C01B 3/50, C01B 31/22, C01B 31/20

(54) **Separation of carbon dioxide and hydrogen**

(71) Applicant: BP Alternative Energy Holdings Limited, Middlesex TW16 7BP (GB)
(72) Inventor: The designation of the inventor has not yet been filed
(74) Representative: Collins, Frances Mary

(57) **Abstract**

This invention relates to the recovery of carbon dioxide (31) and hydrogen (34) in a concentrated form from shifted synthesis gas stream comprising hydrogen and carbon dioxide thereby generating a carbon dioxide stream that is sequestered or used for enhanced oil recovery and a hydrogen stream that is used as fuel for power plant thereby generating electricity. In the process of the present invention a shifted synthesis gas stream is fed to a hydrogen selective membrane separation unit (M-1) at a pressure of at least 50 bar gauge and the hydrogen rich permeate stream (3) is fed directly to the combustor of a gas turbine without any requirement to re-compress the hydrogen. The residual gas stream (carbon, dioxide enriched stream 2) from the membrane separation unit is cooled using at least one, preferably, at least two external refrigeration stages (Ex-1,Ex-2,Ex-3,Ex-4,Ex-5,Ex-6,Ex-7,Ex-8) such that the hydrogen containing offgas (32) is also obtained at above the operating pressure of the combustor of the gas turbine.

## Description

This invention relates to the recovery of carbon dioxide and hydrogen in a concentrated form from a synthesis gas stream comprising hydrogen and carbon dioxide thereby generating a carbon dioxide stream that may be sequestered or used for enhanced oil recovery and a hydrogen stream that may be used as fuel for a power plant thereby generating electricity.

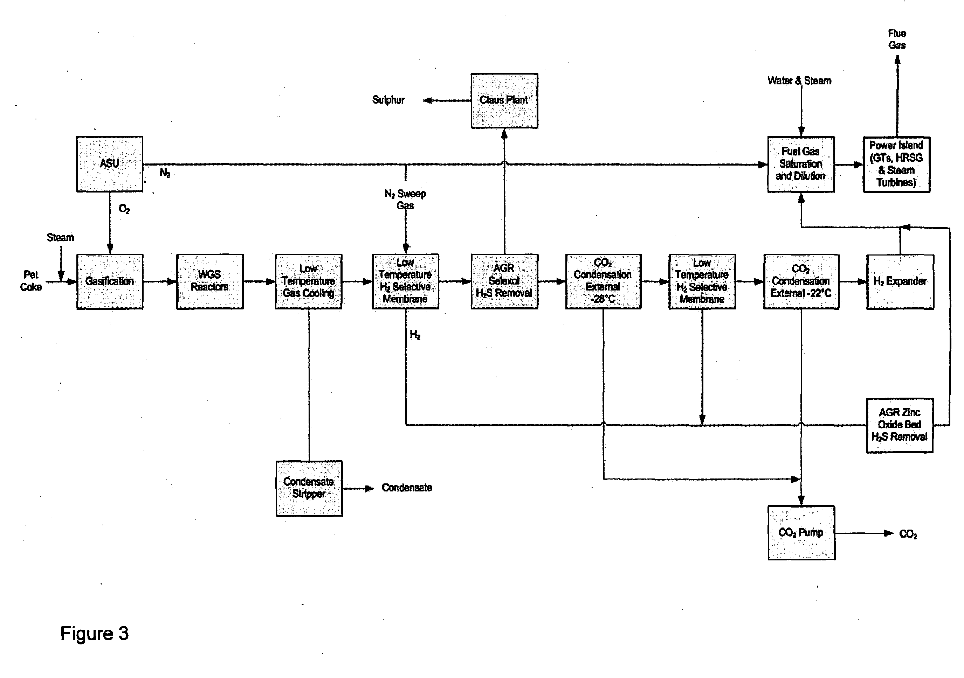

International Patent Application No. WO 2004/089499 relates to configurations and methods of acid gas removal from a feed gas, and especially removal of carbon dioxide and hydrogen sulfide from synthesis gas (syngas). In particular, WO 2004/089499 describes a plant that includes a membrane separator that receives a sulphur-depleted syngas and separates hydrogen from a carbon dioxide-containing reject gas. An autorefrigeration unit is preferably fluidly coupled to the membrane separator and receives the carbon dioxide-containing reject gas, wherein the autorefrigeration unit produces a carbon dioxide product and a hydrogen-containing offgas, and a combustion turbine receives the hydrogen and hydrogen-containing off-gas. In one especially preferred configuration, the shifted and desulfurised syngas is passed through a membrane separation unit to separate hydrogen from a carbon dioxide-rich reject gas, which is dried and liquefied using an autorefrigeration process. The hydrogen from the membrane separation unit is recompressed and then fed (optionally in combination with the autorefrigeration offgas) to the turbine combustor. In most preferred aspects, the turbine combustor is operationally coupled to a generator that produces electrical energy, and heat of the flue gas is extracted using a heat recovery steam generator (HRSG) that forms high pressure steam to drive a steam turbine generator. It is stated that the high operating pressure of the syngas that is fed to the membrane package is advantageously utilized to produce a permeate gas. The permeate gas that is rich in hydrogen has a pressure of about 100 psia. However, the pressure of the syngas feed to the membrane package is not given. The residual gas stream, enriched in CO₂, does not permeate the membrane. This residual gas stream is cooled in a heat exchanger (e.g. with an external refrigerant and an offgas vapour) and is separated into a liquid CO₂ portion and vapour portion. Figure 3 indicates that the external refrigerant is propane and the offgas vapour is an internal refrigerant (cool hydrogen-containing offgas). The vapour portion is then further expanded in expander 360. The person skilled in the art would understand that expansion of the vapour stream results in cooling by the Joule-Thomson effect. The cooled expanded vapour portion is again separated to form a second liquefied CO₂ product which is combined to form a liquefied CO₂ stream and a hydrogen-containing offgas that is employed in the heat exchanger (see above) as internal refrigerant before being sent to the combustion turbine as fuel. It is said that the expansion energy recovered from the residual gas stream can be advantageously be used in the recompression of the hydrogen-rich permeate in a compressor. The so compressed hydrogen-rich permeate may then be combined with the hydrogen-containing offgas and used as fuel in a combustion turbine. The autorefrigeration process of WO 2004/089499 provides two product streams from the syngas, a hydrogen rich offgas stream and a liquefied carbon dioxide stream, capturing about 70% of the total carbon dioxide in the shift effluent. This carbon dioxide can be pumped to approximately 2000 psia and used for Enhanced Oil Recovery (EOR). It should further be appreciated that at least part of the CO₂ can also be employed as a refrigerant (e.g. in a cold box or exchanger to reduce power consumption). The permeate gas from the membrane is re-compressed to approximately 350 psia and mixed with the hydrogen-rich stream from the autorefrigeration process. However, the power required to compress hydrogen is said to be considerable.

It has now been found that by feeding a shifted synthesis gas stream to a hydrogen selective membrane separation unit at a pressure of at least 50 bar gauge that the hydrogen rich permeate stream may be fed directly to the combustor of a gas turbine without any requirement to re-compress the hydrogen. It has also been found that the residual gas stream (carbon dioxide enriched stream) from the membrane separation unit may be cooled using at least one, preferably, at least two external refrigeration stages such that the hydrogen containing offgas is also obtained at above the operating pressure of the combustor of the gas turbine.

Thus, the present invention provides a process for separating hydrogen and carbon dioxide from a synthesis gas stream comprising carbon dioxide and hydrogen, said process comprising:
(A) feeding a shifted synthesis gas stream at a pressure of at least 50 bar gauge to at least one membrane separator unit that is provided with membrane having a selectivity for H₂ over CO₂ of greater than 16 and withdrawing a hydrogen enriched permeate stream having a CO₂ content of less than 10 mole % and a carbon dioxide enriched retentate stream having a CO₂ content of at least 63 mole % CO₂, preferably, at least 70 mole % CO₂ from the membrane separator unit;
(B) feeding the carbon dioxide enriched retentate stream to a carbon dioxide condensation plant where the retentate stream is cooled to condense out liquid CO₂ by:
   (i) passing the carbon dioxide enriched retentate stream through a heat exchanger where the retentate stream is cooled against an external refrigerant to below its dew point thereby forming a cooled stream comprising a liquid phase and a vapour phase wherein the liquid phase comprises substantially pure liquid CO₂ and the vapour phase is enriched in hydrogen compared with the retentate stream;
   (ii) passing the two-phase stream from step (i) to a separator vessel wherein the liquid phase is separated from the vapour phase and withdrawing a liquid CO₂ stream and a hydrogen enriched vapour stream from the separator vessel;
   (iii) if the CO₂ content of the hydrogen enriched vapour stream is greater than 10 mole %, passing the vapour stream through a further heat exchanger where the vapour stream is cooled against a further external refrigerant to below its dew point thereby forming a further cooled stream comprising a liquid phase and a vapour phase wherein the liquid phase comprises substantially pure liquid CO₂ and the vapour phase is further enriched in hydrogen compared with the retentate stream; .
   (iv) passing the two-phase stream from step (iii) to a further separator vessel wherein the liquid phase is separated from the vapour phase and withdrawing a liquid CO₂ stream and a hydrogen enriched vapour stream from the further separator vessel; and
   (vi) if necessary, repeating steps (iii) to (iv) until the CO₂ content of the hydrogen enriched vapour stream that is withdrawn from the further separator vessel is less than 10 mole %;
(C) passing the hydrogen enriched vapour stream having a CO₂ content of less than 10 mole % that is formed in step (B) and/or the hydrogen enriched permeate stream having a CO₂ content of less than 10 mole % that is formed in step (A) as a fuel feed stream to the combustor of at least one gas turbine of a power plant at a pressure above the operating pressure of the gas turbine(s) for the production of electricity; and
(D) sequestering the liquid CO₂ stream(s) formed in step (B).

A synthesis gas stream may be generated from a solid fuel such as petroleum coke or coal in a gasifier or from a gaseous hydrocarbon feedstock in a reformer. The synthesis gas stream from the gasifier or reformer contains high amounts of carbon monoxide. Accordingly, the synthesis gas stream is treated in a shift converter unit to generate a shifted synthesis gas stream. In the shift converter unit, substantially all of the carbon monoxide contained in the synthesis gas stream is converted to carbon dioxide over a shift catalyst according to the water gas shift reaction (WGSR)

CO +H₂O → CO₂ + H₂.

The shift converter unit may be a single shift reactor containing a shift catalyst. However, it is preferred that the shift converter unit comprises a high temperature shift reactor containing a high temperature shift catalyst and a low temperature shift reactor containing a low temperature shift catalyst. The water gas shift reaction is exothermic and results in a significant temperature rise across the shift converter unit. Accordingly, the shift converter unit may be cooled by continuously removing a portion of the shifted synthesis gas stream and cooling this stream by heat exchange with one or more process streams, for example against boiler feed water or against steam (for the generation of superheated steam).

The shifted synthesis gas stream comprises primarily hydrogen, carbon dioxide and steam and minor amounts of carbon monoxide and methane. Where the shifted synthesis gas stream is derived from a gasifier, the shifted synthesis gas will also comprise minor amounts of hydrogen sulfide (H₂S) that is formed by reaction of COS with steam in the shift converter unit.

The shifted synthesis gas stream may be cooled upstream of the membrane separation unit(s) to condense out a condensate (predominantly comprised of water). The condensate is separated from the cooled shifted synthesis gas stream, for example, in a condensate drum. After removal of condensate, the cooled shifted synthesis gas stream is passed to at least one membrane separation unit that is provided with a hydrogen selective membrane that separates the H₂ enriched permeate stream from the CO₂ enriched retentate stream. An advantage of removing the condensate from the cooled shifted synthesis gas stream is that this increases the partial pressure of hydrogen in the shifted synthesis stream that is fed to the membrane separation unit(s). Typically, a plurality of membrane separation units are arranged in parallel. The number of membrane separation units will be dependent upon the desired membrane area. Typically, the membrane separation unit(s) is provided with a spiral wound membrane or a plurality of hollow fibre membranes. The membrane employed in the membrane separation unit(s) is selective for hydrogen over carbon dioxide such that hydrogen selectively passes through the membrane owing to its diffusivity (size) and/or solubility in the material that comprises the membrane. There are many types of membrane available that are selective for hydrogen over carbon dioxide, including polymeric membranes such as polybenzimidazole (PBI) membranes, microporous carbon membranes and membranes comprising palladium or palladium alloys on a supporting material. However, palladium or palladium alloy membranes may only be employed where the shifted synthesis gas stream that is fed to the membrane separation unit(s) does not contain significant amounts of sulphur containing impurities, as these impurities will degrade the palladium or palladium alloy component of the membrane.

Preferably, the hydrogen selective membrane is a low temperature hydrogen selective membrane that is capable of operating at a temperature that is at or slightly above ambient temperature, for example at a temperature in the range of 0 to 50°C, in particular, 20 to 40°C.

However, it may be preferred to operate certain hydrogen selective membranes (for example, PBI membranes or membranes comprising palladium or a palladium alloy on a supporting material) at higher temperatures as the H₂ permeability of these membranes has been found to increase significantly with temperature. Thus, it may be desirable to operate the membrane separation unit(s) at a temperature of above 50°C, for example, at a temperature in the range of 75 to 400°C, preferably, 100 to 300°C.

It is envisaged that the hot shifted synthesis gas stream from the shift converter unit may be passed to the membrane separation unit(s) without cooling to condense out a condensate. Accordingly, the water that is contained in the hot shifted synthesis gas is in a vapour state (steam). Typically, at least a portion of the steam that is contained in the hot shifted synthesis gas will pass through the membrane together with the hydrogen. The presence of steam in the H₂ enriched permeate stream may be advantageous as this may reduce NOₓ emissions from the combustor of the gas turbine(s). Typically, a diluent, for example, nitrogen, is added to the fuel feed stream that is fed to the combustor of the gas turbine(s). Thus, a further advantage of the presence of steam in the H₂ enriched permeate stream is that this reduces the required dilution. Accordingly, there may be no requirement to remove the steam from the permeate stream. The CO₂ enriched retentate stream that is removed from the membrane separation unit(s) is at elevated temperature and is cooled downstream of the membrane separation unit(s), for example, against water, before entering the CO₂ condensation plant. Where significant amounts of steam are retained in the CO₂ enriched retentate stream, a condensate (predominantly water) will condense out of the retentate stream and is removed, for example, in a condensate drum.

The presence of steam in the hot shifted synthesis gas lowers the H₂ partial pressure of the feed to the membrane separation unit(s). Accordingly, it is also envisaged that the feed to the membrane separation unit(s) is a cooled shifted synthesis gas stream (as described above) that has subsequently been reheated to the desired membrane operating temperature, for example, 75 to 400°C. Thus, condensate (predominantly water) is removed from the shifted synthesis gas stream upstream of the membrane separation unit. The cooled shifted synthesis gas stream may be reheated against a hot process stream or steam.

The shifted synthesis gas stream is fed to the membrane separation unit(s) at a pressure of at least 50 barg, preferably, at a pressure of at least 60 barg. If necessary, the pressure of the shifted synthesis gas stream is boosted to the desired operating pressure of the membrane separation unit(s). Thus, a compressor may be installed upstream of the membrane separation unit(s). Typically, the CO₂ enriched retentate stream may be withdrawn from the membrane separation unit(s) at a pressure that is 2 to 3 bar below the pressure of the shifted synthesis gas feed stream. The person skilled in the art will understand that there is a pressure drop across the membrane of the membrane separation unit(s). Typically, the pressure drop across the membrane is in the range of 10 to 30 bar. Preferably, the H₂ enriched retentate stream is withdrawn from the membrane separation unit(s) at a pressure that is above the operating pressure of the gas turbine(s) of the power plant (see below).

The hydrogen selective membrane that is employed in the membrane separation unit(s) has a H₂ selectivity (over CO₂) of greater than 16, in order to prevent significant quantities of CO₂ from entering the hydrogen enriched permeate stream as this would reduce the CO₂ capture level. Preferably the hydrogen selectivity of the membrane is greater than 20, in particular greater than 40. Typically, the CO₂ content of the hydrogen enriched permeate stream is less than 10 mole %, preferably, less than 5 mole%, in particular, less than 2 mole%. Typically, the CO₂ content of the CO₂ enriched retentate stream is in the range of 63 to 85 mole%, preferably 70 to 85 mole%.

In order to improve the performance of the hydrogen selective membrane a sweep gas comprising nitrogen and/or steam may be added to the permeate stream. The addition of the sweep gas reduces the hydrogen partial pressure of the permeate stream and therefore improves the separation efficiency. In addition, where nitrogen is employed as the sweep gas, this will dilute the hydrogen fuel stream to the level required for combustion in the combustor of the gas turbine(s).

A discussed above, where the shifted synthesis gas stream is derived from a synthesis gas stream that is formed by gasification of petroleum coke or coal in a gasifier, the shifted synthesis gas will contain H₂S as an impurity (sour shifted synthesis gas). An advantage of the process of the present invention is that it allows the capture of the H₂S in addition to carbon dioxide (CO₂). Any H₂S that is captured may be either converted into elemental sulphur using the Claus Process or into industrial strength sulphuric acid. Typically, the H₂S may be captured either upstream or downstream of the membrane separation unit. For example, the H₂S may be selectively absorbed from the sour shifted synthesis gas stream in an absorption tower arranged upstream of the membrane separation unit(s). Alternatively, H₂S may be selectively absorbed from the CO₂ enriched retentate stream in an absorption tower arranged downstream of the membrane separation unit. Typically, Selexol™ (a mixture of dimethyl ethers of polyethylene glycol) may be employed as the absorbent. Where the feed to the membrane separation unit(s) is a sour shifted synthesis gas, it is envisaged that a portion of the H₂S may pass through the hydrogen selective membrane such that the hydrogen enriched permeate stream contains H₂S as an impurity. Accordingly, the hydrogen enriched permeate stream is passed through a bed of a solid absorbent that is capable of absorbing H₂S, for example, a bed of zinc oxide, thereby desulfurising the hydrogen enriched permeate stream.

After removal of any condensate (see above), the CO₂ enriched retentate stream is dried prior to being passed to the CO₂ condensation plant, as any moisture in the CO₂ enriched retentate stream will freeze and potentially cause blockages in the plant. The CO₂ enriched retentate stream may be dried by being passed through a molecular sieve bed or an absorption tower that employs triethylene glycol to selectively absorb the water. Preferably, the dried CO₂ enriched retentate stream has a water content of less than 1 ppm (on a molar basis).

Preferably, the dried CO₂ enriched retentate stream is then passed to a pre-cooling heat exchanger of the CO₂ condensation plant where the retentate stream is pre-cooled against a cold stream (for example, cold water or a cold process stream such as a liquid CO₂ product stream or a cold H₂ enriched vapour stream). Typically, the retentate stream is pre-cooled to a temperature in the range 0 to 10°C, for example, about 2°C. Depending upon the composition of the CO₂ enriched retentate stream, the pre-cooled stream may remain in a vapour state or may be cooled to below its dew point thereby becoming two phase.

The retentate stream is then passed through at least one cryogenic separation stage of the CO₂ condensation plant, preferably, through a plurality of cryogenic separation stages that are arranged in series. Each cryogenic separation stage comprises a heat exchanger that employs an external refrigerant and a gas-liquid separation vessel (for example, a flash vessel). Preferably, the CO₂ condensation plant comprises 2 to 10, more preferably, 4 to 8, for example, 5 to 7 cryogenic separation stages arranged in series.

By "external refrigerant" is meant a refrigerant that is formed in an external refrigeration circuit. Accordingly, liquid CO₂ that is formed in the process of the present invention is not regarded as an external refrigerant. Suitable external refrigerants that may be used as refrigerant in the heat exchanger(s) of the separation stages(s) include propane, ethane, ethylene, ammonia, hydrochlorofluorocarbons (HCFC's) and mixed refrigerants. Typical mixed refrigerants comprise at least two refrigerants selected from the group consisting of butanes, propanes, ethane, and ethylene. These refrigerants may be cooled to the desired refrigeration temperature in external refrigerant circuits using any method known to the person skilled in the art including methods known in the production of liquefied natural gas.

Where the CO₂ condensation plant comprises a plurality of cryogenic separation stages arranged in series, the separator vessels of the cryogenic separation stages are operated at successively lower temperatures. The operating temperature of each cryogenic separation stage will depend on the number of cryogenic separation stages and the desired carbon dioxide capture level. There is a limit on the lowest temperature in the final cryogenic separation stage, as the temperature must be maintained above a value where solid CO₂ will form. This typically occurs at a temperature of -56°C (the triple point for pure CO₂ is at 5.18 bar and at a temperature of 56.4°C) although the presence of H₂ may depress this freezing point. In addition, there is an upper limit on the pressure of the cryogenic separation stages. Thus, the pressure must be below the cricondenbar (typically 73 bara) for the feed streams to each of the separation stages. By cricondenbar is meant the highest pressure at which a liquid and gaseous phase may co-exist. This is dependent upon the composition of the feed streams to the cryogenic separation stages.

Typically, the pressure drop across the cryogenic separation stages of the CO₂ condensation plant is in the range of 2 to 10 bar, preferably, 2 to 5 bar, in particular, 2 to 3 bar. Thus, the cryogenic separation stages may be operated at substantially the same pressure. However, higher pressure drops may be tolerated (for example, pressure drops in the range of 10 to 30 bar, preferably 10 to 20 bar) provided that the H₂ enriched vapour stream that is removed from the separator vessel of the final cryogenic separation stage is above the feed pressure for the gas turbine(s) of the power plant.

The process of the present invention will now be described with respect to a CO₂ condensation plant that comprises a plurality of cryogenic separation stages. The retentate stream is passed through the heat exchanger of the first cryogenic separation stage where the retentate stream is cooled to below its dew point against an external refrigerant thereby forming a two phase stream comprising a liquid phase (substantially pure liquid CO₂) and a vapour phase (comprising H₂ and residual CO₂). The two phase stream is then passed to the gas-liquid separator vessel (for example, a flash vessel) of the first cryogenic separation stage where the liquid phase is separated from the vapour phase. A hydrogen enriched vapour stream and a liquid CO₂ stream are withdrawn from the separator vessel, preferably, from at or near the top and bottom respectively of the separator vessel.

The H₂ enriched vapour stream is then used as feed to a further cryogenic separation stage where the vapour stream is passed through a further heat exchanger and is cooled to below its dew point against a further external refrigerant. The resulting two phase stream is passed to the gas-liquid separator vessel (preferably, a flash vessel) of the further cryogenic separation for separation of the phases. A vapour stream that is further enriched in H₂ and liquid CO₂ stream are withdrawn from the separator vessel, preferably, from at or near the top and bottom respectively of the separator vessel. These steps may be repeated until sufficient CO₂ has been captured from the H₂ enriched vapour stream (non-condensable stream) that is withdrawn from the final cryogenic separation stage of the series. Thus, the feed to the second and any subsequent cryogenic separation stage is the H₂ enriched vapour stream (non-condensable stream) that is separated in the preceding cryogenic separation stage in the series. Typically, the amount of CO₂ contained in the H₂ enriched vapour stream (non-condensable stream) that is removed from the final cryogenic separation stage of the CO₂ condensation plant is less than 10 mole %, preferably, less than 5 mole %, in particular, less than 2 mole %.

The person skilled in the art will understand that the H₂ enriched vapour stream that is fed to the second cryogenic separation stage of the CO₂ condensation plant is of higher H₂ content than the CO₂ enriched retentate stream that is fed to the first cryogenic separation stage of the CO₂ condensation plant. Also, the H₂ enriched vapour stream that is fed to any third or further cryogenic separation stage(s) of the CO₂ condensation plant is of successively higher H₂ content. Where the H₂ enriched vapour stream that is withdrawn from the separator vessel of an intermediate cryogenic separation stage is sufficiently enriched in hydrogen (has a H₂ content of at least 40 mole %, preferably, at least 50 mole %), this H₂ enriched vapour stream may be passed to a membrane separation unit of the CO₂ condensation plant where a hydrogen selective membrane is used to separate a hydrogen enriched permeate stream from a CO₂ enriched retentate stream. The hydrogen enriched permeate stream has a CO₂ content of less than 10 mole %, preferably, less than 5 mole%, in particular, less than 2 mole % and may therefore be combined with the hydrogen enriched permeate stream from the membrane separation unit that is arranged upstream of the CO₂ condensation plant. Preferably, the two H₂ enriched permeate streams are combined upstream of any H₂S absorbent bed. The CO₂ enriched permeate stream is then used as feed to a further cryogenic separation stage of the CO₂ condensation plant. The use of a membrane separator unit within the CO₂ condensation plant may allow the elimination of one or more cryogenic separation stages or allow the subsequent cryogenic separation stage(s) to be operated at a higher temperature thereby reducing the refrigeration duty. It is envisaged that the CO₂ condensation plant may comprise more than one membrane separation unit. For example, the CO₂ condensation plant may comprise at least one cryogenic separation stage upstream of a first membrane separation unit, at least one cryogenic separation stage downstream of the first membrane unit and upstream of a second membrane separation unit and at least one cryogenic separation stage downstream of the second membrane unit. If necessary, the H₂ enriched vapour feed to the membrane separation unit(s) of the CO₂ condensation plant is heated (against a hot process stream or steam) to above the operating temperature of the hydrogen selective membrane. It may therefore be necessary to subsequently cool the CO₂ enriched retentate stream that is formed in the membrane separation unit (against a cold process stream or water) before passing the CO₂ enriched retentate stream to a subsequent cryogenic separation stage.

Typically, the hydrogen enriched vapour stream (non-condensable stream) from the final cryogenic separation stage of the CO₂ condensation plant comprises at least 90 mole % hydrogen, preferably, at least 95 % hydrogen, more preferably, at least 98 mole % hydrogen, in particular, at least 99 mole % hydrogen (depending upon the desired carbon dioxide capture level), the remainder being mostly carbon dioxide. Typically, the amount of CO₂ contained in the H₂ enriched vapour stream that is removed from the final cryogenic separation stage of the CO₂ condensation plant is less than 10 mole % CO₂, preferably, less than 5 mole% CO₂, more preferably; less than 2 mole % CO₂, in particular, less than 1 mole % CO₂. This hydrogen enriched stream may also comprise trace amounts of carbon monoxide (CO) and methane, for example, less than 500 ppm on a molar basis. The H₂ enriched vapour stream from the CO₂ condensation plant may be combined with the H₂ enriched permeate stream from the membrane separator unit(s) to form a fuel stream that is fed to the combustor of at least one gas turbine that drives an electric generator thereby producing electricity.

Although the process of the present invention has been described with respect to a CO₂ condensation plant comprising two or more cryogenic separation stages arranged in series, it is also envisaged that there may be a single cryogenic separation stage. Where the CO₂ condensation plant comprises a single separation stage, ethane and/or ethylene is used as external refrigerant in order to achieve a sufficiently low temperature in the separation vessel (of approximately -50°C) to condense out sufficient CO₂ to achieve the desired carbon dioxide capture level of less than 10 mole %, preferably, less than 5 mole %, in particular, less than 2 mole %.

An advantage of the process of the present invention is that the hydrogen enriched permeate stream from the membrane separation unit(s) is at a pressure higher than the operating pressure of the gas turbine(s) of the power plant. In addition, the hydrogen enriched vapour stream (non-condensable stream) from the CO₂ condensation plant is obtained at a pressure higher than the operating pressure of the gas turbine(s). Accordingly, there is no requirement for a gas compressor to compress the hydrogen fuel stream to above the operating pressure of the combustor of the gas turbine(s). Typically, the combustor of the gas turbine has an operating pressure in the range of 25 to 45 barg, preferably, 28 to 40 barg, in particular, 30 to 35 barg. Typically, the H₂ enriched vapour stream (non-condensable stream) from the CO₂ condensation plant is expanded in an expander down to the inlet pressure of the gas turbines. The expansion energy recovered from the H₂ enriched vapour stream in the expander can be converted into power for export or for use within the process (e.g. to drive the CO₂ pumps).

Preferably, the hydrogen fuel stream that is fed to the combustor of the gas turbine(s) contains 35 to 65% by volume?? hydrogen, more preferably, 45 to 60% by volume hydrogen, for example, 48 to 52% by volume of hydrogen. It is envisaged that the hydrogen stream may comprise trace amounts of carbon oxides (CO and CO₂) and of methane. The remainder of the hydrogen fuel stream is nitrogen and/or steam arising from the sweep gas and/or added as a diluent to the hydrogen fuel stream.

The exhaust gas from the gas turbine(s) is passed to a heat recovery and steam generator unit (HRSG) where the exhaust gas may be heat exchanged with various process streams. Optionally, the temperature of the exhaust gas of the gas turbine is increased by providing the HRSG with a post-firing system, for example, a post-firing burner. Suitably, the post-firing burner is fed with a portion of the hydrogen fuel stream and the hydrogen fuel stream is combusted in the burner using residual oxygen contained in the exhaust gas. Suitably, the exhaust gas is raised in temperature in the post-firing system to a temperature in the range of 500 to 800°C.

Typically, the HRSG generates and superheats steam for use in at least one steam turbine and elsewhere in the process of the present invention. Typically, the HRSG is capable of generating high pressure (HP) steam, medium pressure (MP) steam and low pressure (LP) steam and of superheating these steam streams. The HRSG may also be capable of reheating MP steam that is produced as an exhaust stream from the high pressure stage of a multistage steam turbine. In addition, the HRSG may be used to heat boiler feed water (for example, boiler feed water that is fed to the waste heat boiler of a shift converter unit).

The cooled exhaust gas is discharged from the HRSG to the atmosphere through a stack. Preferably, the stack is provided with a continuous emission monitoring system for monitoring, for example, the NOₓ content of the cooled exhaust gas.

The liquid CO₂ streams that are withdrawn from the separator vessels of the cryogenic separation stage(s) preferably comprises at least 95 mole% CO₂, in particular, at least 98 mole % CO₂, the remainder being mostly hydrogen with some inerts, for example, nitrogen and/or CO. Preferably, these liquid CO₂ streams are combined and the resulting combined stream is then pumped to the pipeline delivery pressure (with the increase in pressure resulting in the CO₂ entering a dense phase state). The combined stream is transferred by pipeline to a reception facility of an oil field where the combined stream may be used as an injection fluid in the oil field. If necessary, the combined stream is further pumped to above the pressure of the hydrocarbon-bearing formation of the oil field before being injected into the hydrocarbon-bearing formation. The injected CO₂ displaces the hydrocarbons towards an associated production well for enhanced recovery of hydrocarbons therefrom. If any carbon dioxide is produced from the production well together with the hydrocarbons, the carbon dioxide may be separated from the hydrocarbons for re-injection into the hydrocarbon-bearing formation such that the CO₂ is sequestered in the hydrocarbon-bearing formation. It is also envisaged that the combined stream may be injected into other subterranean formations (for example, an aquifer) or into a cavern for storage therein.

The process of the present invention will now be illustrated by reference to Figures 1 to 4.

Figure 1 is a block flow diagram that illustrates the production of a synthesis gas stream comprising hydrogen and carbon dioxide and the separation of a hydrogen enriched fuel stream from a carbon dioxide stream using a hydrogen selective membrane separation unit upstream of a CO₂ condensation plant.

Figure 2 provides a more detailed view of the membrane separation unit and the CO₂ condensation plant for the capture of CO₂ from a synthesis gas stream.

Figures 3 and 4 are block flow diagrams that illustrate modified schemes for separating a hydrogen enriched fuel stream from a carbon dioxide enriched stream in which there is a second hydrogen selective membrane separation unit within the CO₂ condensation plant.

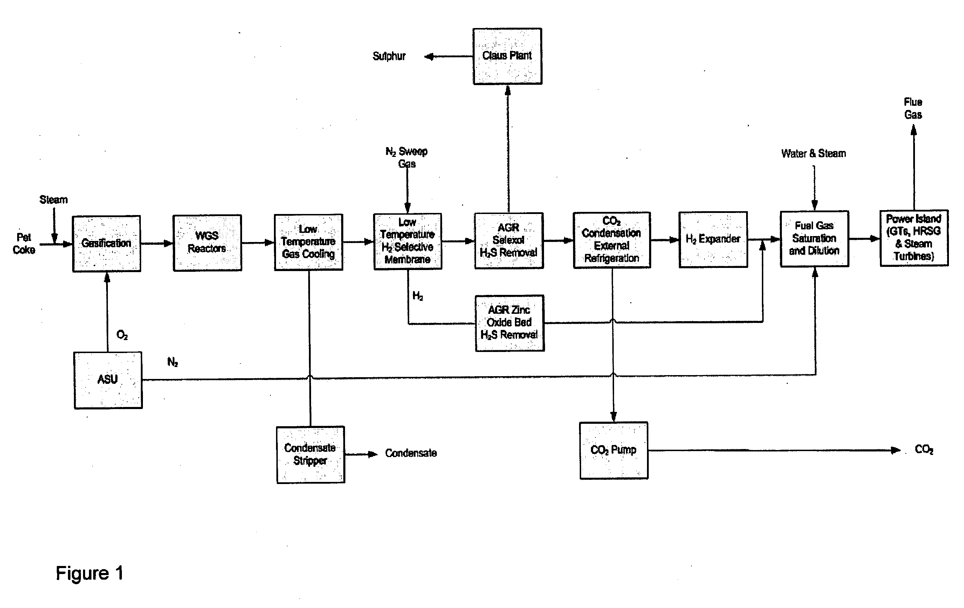

In Figure 1, a fuel, either petroleum coke or coal, is pre-processed (crushed and slurried with water) prior to being sent to a gasifier. Steam is added to the petroleum coke or coal upstream of the gasifier. In addition, Oxygen is fed into the gasifier from an Air Supply Unit (ASU) in order to provide heat to the gasification process and to partially oxidise the fuel. The ASU also provides a source of nitrogen which is used as a diluent for the hydrogen fuel stream that is fed to the gas turbines (GTs) of a Power Island. The gasifier converts the petroleum coke or coal fuel to a synthesis gas stream (commonly known as syngas), which is a mixture of predominantly hydrogen (H₂), carbon monoxide (CO), carbon dioxide (CO₂), hydrogen sulfide (H₂S), COS, water (Steam) and other minor impurities (inerts and heavy metals).

In order to convert the syngas to a mixture of predominantly CO₂ and hydrogen, the syngas is passed to Water Gas Shift (WGS) reactors. Depending on the amount of H₂S in the petroleum coke or coal fuel, these WGS reactors may be sour WGS reactors, and will convert CO to CO₂ and COS to H₂S. Typically, the number of WGS reactors will be dependent on the amount of CO generated from the gasifier and the level of CO₂ capture the plant is aiming to achieve. Typically, two stages of WGS are used.

The sour shifted syngas from the WGS Reactors is then subjected to Low Temperature Gas Cooling to knock out water contained in the sour shifted syngas. typically, this is achieved by cooling the sour shifted syngas to a temperature of approximately 30 to 40°C in a heat exchanger against boiler feed water thereby generating steam. Cooling results in condensation of the majority of the water which is separated in a knockout drum. In practise, cooling of the sour shifted syngas generates two steam streams, low pressure (LP) steam and medium pressure (MP) steam. These steam streams may be used in the upstream plant (gasifier) or sent to a steam turbine for electricity generation. The water that is separated in the knock-our drum will contain trace amounts of CO₂ and other impurities. These impurities are stripped from the condensate in a Condensate Stripper. The remaining condensate (water) is then used as boiler feed water.

The shifted syngas from the Low Temperature Gas Cooling Stage is then sent, at a pressure of at least 50 barg to a Low Temperature (LT) Hydrogen Selective membrane separation unit. The membrane employed in the membrane separation unit is selective for hydrogen over carbon dioxide (selectivity of greater than 16).

In order to improve the performance of the membrane a nitrogen or steam sweep gas may be added to the permeate stream. The addition of the nitrogen or steam sweep gas reduces the hydrogen partial pressure and improves the separation efficiency. In addition, where nitrogen is employed as the sweep gas, this will dilute the hydrogen permeate stream to the level required for combustion in the gas turbine (GT) of the Power Island. Where the hydrogen permeate stream contains low amounts of H₂S impurity, the hydrogen permeate stream is passed through a H₂S absorbent, for example, a zinc oxide bed, prior to combustion of the hydrogen fuel stream in the GT.

The CO₂ enriched retentate stream from the membrane separation unit comprises at least 70 mole % CO₂ (typically, 70 to 80 mole% CO₂) and is sent to an Acid Gas Removal (AGR) plant where the H₂S is stripped out of the CO₂ enriched stream via the use of a physical or chemical absorbent in an absorption tower. Typically Selexol™ (a mixture of dimethyl ethers of polyethylene glycol) is used as absorbent. The separated H₂S may be passed to a Claus plant for the production of elemental sulphur, or may be converted to sulphuric acid in a sulphuric acid plant.

The CO₂ enriched retentate stream is then dried, as any moisture in the retentate stream will cause freezing and blockages in downstream process equipment. Viable options for dehydrating the CO₂ enriched retentate stream include passing the gas through a molecular sieve bed or through an absorption tower that uses triethylene glycol (TEG) as absorbent. Typically, the water content of the dried CO₂ enriched retentate stream is less than 1 ppm (molar basis).

Once dehydrated, the CO₂ enriched retentate stream is sent to a CO₂ condensation plant that will liquefy the CO₂ by cooling the retentate stream to below its dewpoint against an external refrigerant in a heat exchanger so that the stream becomes two phase (a liquid phase comprising substantially pure liquid CO₂ and a vapour phase comprising CO₂ and H₂ that is enriched in H₂ compared with the retentate stream). The liquid phase is then separated from the vapour phase in a separator vessel (for example, a flash vessel) with a liquid CO₂ stream and a hydrogen enriched vapour stream being removed from at or near the bottom and top of the separator vessel respectively. Where the CO₂ content of the hydrogen enriched vapour stream is above 10 mole%, the level of CO₂ capture is unacceptable. Accordingly, the hydrogen enriched vapour stream is cooled to below its dewpoint against a further external refrigerant so that the stream becomes two phase and a liquid phase (substantially pure liquid CO₂) is then separated from a vapour phase (that is further enriched in hydrogen) in a separator vessel. This may be repeated until a sufficient level of CO₂ capture has been achieved. The cryogenic cooling of the CO₂ enriched retentate stream (and of the hydrogen enriched vapour stream(s)) against an external refrigerant and the separation of a liquid CO₂ stream from a hydrogen enriched vapour stream in a separator vessel is hereinafter referred to as a "cryogenic separation stage". It is essential that the CO₂ enriched retentate stream enters the first cryogenic separation stage of the CO₂ condensation plant (and the hydrogen enriched vapour stream(s) enters each subsequent cryogenic separation stage of the CO₂ condensation plant) at a pressure below the cricondenbar for the multicomponent composition(s) otherwise the streams cannot become two phase on cooling (the cricondenbar is the highest pressure at which two phases can coexist). It is also essential that the CO₂ enriched retentate stream (and the hydrogen enriched vapour stream(s)) are not cooled to below their bubble points otherwise the streams will not become two phase. Generally, propane is used as refrigerant in one or more cryogenic separation stages followed by the use of ethane and/or ethylene as refrigerant in one or more further cryogenic separation stages, depending on the desired condensation temperatures in the different cryogenic separation stages. However, other refrigerants may be used such as ammonia, hydrochlorofluorocarbons (HCFC's) and mixed refrigerants. Typical mixed refrigerants comprises at least two refrigerants selected from the group consisting of butanes, propanes, ethane, and ethylene.

The liquid CO₂ streams that are withdrawn from the separation vessels of the CO₂ condensation plant are combined and passed to a pump that increases the pressure of the combined liquid CO₂ stream such that the CO₂ enters the dense phase for transportation.

The H₂ enriched vapour stream that is separated in the last cryogenic separation stage of the series comprises predominantly hydrogen and a small amount of CO₂ (generally at least 98 mol% hydrogen, preferably, at least 99 mole% hydrogen). This H₂ enriched vapour stream is at a high pressure (typically, approximately 46 barg). Accordingly, the hydrogen enriched vapour stream is expanded in an expander down to the inlet pressure of the gas turbines (GTs) of the Power Island. The expansion energy recovered from the H₂ enriched vapour stream in the expander can be converted into power for export or for use within the plant (e.g. to drive the CO₂ pumps). The expanded hydrogen stream is then combined with the hydrogen enriched permeate stream from the Low Temperature H₂ selective membrane separation unit before being sent to a Fuel Gas Saturation and Dilution Stage (saturation tower) where the combined stream is further diluted with steam and optionally nitrogen thereby generating a fuel stream comprising approximately 50 mol% hydrogen. Dilution of the fuel stream is required in order to control NOₓ emissions and flame speeds. The fuel stream is then sent to the Power Island, where the fuel is combusted in air in the combustor of at least one modified gas turbine (GT). The GT can be used to drive an electric motor thereby generating electricity. The exhaust gas from the gas turbine is passed to a Heat Recovery Steam Generator (HRSG) where the exhaust is heat exchanged with boiler feed water thereby generating steam or with steam to generate superheated steam. Typically, three levels of steam (HP, MP or LP) can be generated from boiler feed water. The resulting steam streams may be combined with the petroleum coke or coal that is fed to the gasifier and/or may be used in a steam turbine that drives an electric generator thereby producing additional electricity. The exhaust gas from the HRSG is vented to atmosphere.

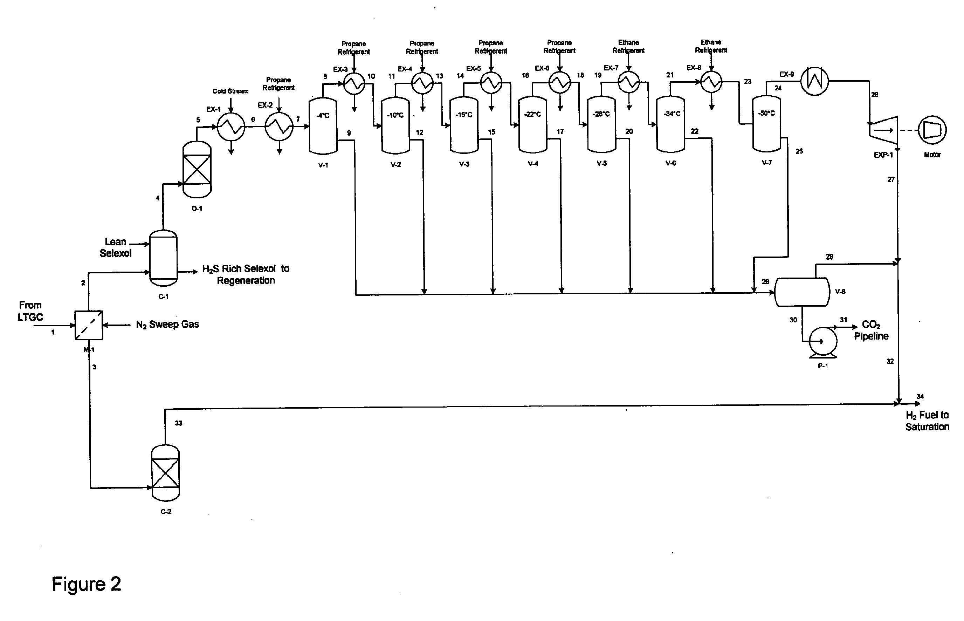

Figure 2 shows a detailed process flow diagram for the hydrogen selective membrane separation unit and the CO₂ condensation plant of the block diagram outlined in Figure 1. A shifted synthesis gas stream 1 is fed at a pressure of at least 50 barg to at least one membrane separation unit M-1, preferably a plurality of membrane separation units arranged in parallel. The membrane separation unit(s) M-1 are provided with a hydrogen selective membrane that is capable of a bulk separation of a hydrogen enriched permeate stream 3 from a CO₂ enriched retentate stream 2. Where the shifted synthesis gas is derived from a high pressure gasifier, the synthesis gas may be obtained at above the desired operating pressure for the membrane separation unit(s) of at least 50 barg. Where the shifted synthesis gas is derived from a reformer, it may be necessary to boost the pressure to at least 50 barg. Typically, the temperature of the shifted synthesis gas stream 1 is in the range of 30 to40°C.

The shifted synthesis gas stream 1 comprises hydrogen (for example, 50 to 60 mol%, typically 55 mol%), carbon dioxide (for example, 40 to 50 mol%, typically 45 mol%), and contaminants such as water, inerts (for example nitrogen and/or argon), methane and carbon monoxide. Where the shifted synthesis gas stream is from a high pressure coal or petroleum coke gasifier, it may be a sour shifted synthesis gas stream comprising hydrogen sulfide (0.2 to 1.5 mol%, typically 1 mol%). However, it is also envisaged that hydrogen sulfide may have been removed from the shifted synthesis gas stream 1 upstream of the membrane separation unit(s) M-1. Where the shifted synthesis gas stream is derived from a reformer, hydrogen sulfide will have been removed from the feed to the reformer so as to avoid poisoning the reforming catalyst. Accordingly, the shifted synthesis gas stream will not contain any hydrogen sulfide impurity.

The membrane that is employed in the membrane separation unit(s) M-1 has a H₂ selectivity (over CO₂) of 16, in order to prevent significant quantities of CO₂ from entering the hydrogen enriched stream 3 as this will reduce the carbon capture level. Preferably the hydrogen selectivity of the membrane is greater than 20, in particular greater than 40.

Optionally, a sweep gas may be introduced to the membrane separation units at the permeate side of the membrane in order to reduce the partial pressure of hydrogen in the permeate stream. This is advantageous as it improves the hydrogen selectivity of the membrane and increases the hydrogen flux through the membrane. The sweep gas may be nitrogen, for example, a nitrogen stream that is produced as a by-product in an Air Supply Unit (ASU) that supplies oxygen to a gasifier or reformer. Alternatively, the sweep gas may be steam.

The hydrogen enriched permeate stream is used as a fuel stream for one or more gas turbines. Typically, the pressure of the hydrogen enriched permeate stream 3 is in the range is above the pressure at which the gas turbine(s) are operated in order to avoid the need for hydrogen compression, which is energy intensive.

Where hydrogen sulfide is present in the synthesis gas stream 1, a portion of this H₂S will pass through the hydrogen selective membrane together with the hydrogen. Accordingly, the hydrogen enriched permeate stream 3 is passed through a bed of absorbent, such as a zinc oxide bed (C-2) to ensure that any H₂S is removed from the hydrogen enriched permeate stream upstream of the gas turbine (not shown).

Suitably, the retentate stream 2 from the membrane separation unit(s) M-1 has a CO₂ concentration of 70 to 80mol% (depending of the Selectivity of the membrane). Where stream 1 is a sour synthesis gas stream, the CO₂ enriched retentate stream 2 from the membrane is sent on to an Absorption Tower (C-1), where the stream 2 is contacted with a solvent that acts as a selective absorbent for H₂S thereby generating a desulfurised shifted synthesis gas stream 4. Suitable solvents that act as selective absorbent for H₂S include Rectisol™ (methanol) or Selexol™ (a mixture of dimethyl ethers of polyethylene glycol).

The desulfurised shifted stream 4 is sent to a drier (D-1) in order to remove water prior to condensing out the CO₂ in a condensation plant. There are many methods known in the art for the removal of saturated water from a process stream including absorbent beds (for example, molecular sieve beds) and / or an absorption tower that employs triethylene glycol (TEG) as water absorbent. The resulting dehydrated shifted synthesis gas stream 5 enters the CO₂ condensation plant at a an elevated pressure of at least 45 barg, typically 46 barg and at ambient temperature, typically 25°C, where it is cooled in EX-1 to a temperature of approximately 2°C against cold water or another "cold stream", which maybe a slipstream of liquid CO₂ or a cool gaseous H₂ stream arising downstream of EX-1.

The cooled shifted synthesis gas stream 6 then enters the first of a series of cryogenic separation stages each of which comprises a heat exchanger and flash vessel. The flash vessels (V-1 to V-7) are operated at substantially the same pressure but at successively lower temperatures. In heat exchanger EX-2, the cooled synthesis stream 6 is further cooled to a temperature of -4°C against propane refrigerant to generate a two phase stream 7 which is then passed to flash vessel V-1 where a portion of the CO₂ in stream 7 separates as a liquid phase from a vapour phase. A vapour stream 8 that is enriched in hydrogen and depleted in CO₂ is removed overhead from flash vessel V-1 and is passed through heat exchanger EX-3 where it is further cooled against propane refrigerant to a temperature of-10°C thereby generating a further two phase stream 10 which is passed to flash vessel V-2 where a portion of the CO₂ in stream 10 separates as a liquid phase from a vapour phase. A vapour stream 11 that is further enriched in hydrogen is withdrawn overhead from flash vessel V-2 and is passed through heat exchanger EX-4 where this stream is further cooled to a temperature of-16°C against propane refrigerant thereby generating a two phase stream 13 that is passed to flash vessel V-3 where a portion of the CO₂ in stream 13 separates as a liquid phase from a vapour phase. A vapour stream 14 that is further enriched in hydrogen is withdrawn overhead from flash vessel V-3 and is passed through heat exchanger EX-5 where this stream is further cooled to a temperature of -22°C against propane refrigerant thereby generating a further two phase stream that is passed to flash vessel V-4 where a portion of the CO₂ in this stream separates as a liquid phase from a vapour phase. A vapour stream 16 that is further enriched in hydrogen is withdrawm overhead from flash vessel V-4 and is passed through heat exchanger EX-6 where this stream is further cooled to a temperature of -28°C against propane refrigerant thereby generating a further two phase stream 18 that is passed to flash vessel V-5 where a portion of the CO₂ in stream 18 separates as a liquid phase from a vapour phase. A vapour stream 19 that is further enriched in hydrogen is withdrawn overhead from flash vessel V-5 and is passed through heat exchanger EX-7 where this stream is further cooled to a temperature of -34°C against ethane refrigerant thereby generating a further two phase stream that is passed to flash vessel V-6 where a portion of the CO₂ in this stream separates as a liquid phase from a vapour phase. A vapour stream 21 that is further enriched in H₂ is withdrawn overhead from flash vessel V-6 and is passed through heat exchanger EX-8 where this stream is further cooled to a temperature of -50°C against ethane refrigerant thereby generating a final two phase stream 23 that is passed to flash vessel V-7 where a final portion of the CO₂ separates as a liquid phase from a vapour phase. A non-condensable stream 24 comprising at least 98% H₂ is withdrawn overhead from flash vessel V-7. This non-condensable stream 24 is heated in a heater to generate stream 26 before being expanded to lower pressure in expander EXP-1 thereby generating hydrogen stream 27. Suitably, the expander EXP-1 is connected to a motor to recover energy. The H₂ stream 27 is mixed with the membrane permeate stream 33 thereby generating hydrogen fuel stream 34 that is sent to at least one gas turbine (not shown) for combustion. The pressure of the hydrogen fuel stream 34 is above the operating pressure of the gas turbine thereby allowing the omission of a hydrogen compressor.

The propane refrigerant that is fed to the shell side of heat exchangers EX-2, EX-3, EX-4, EX-5 and EX-6 (and the ethane refrigerant that is fed to the shell side of heat exchangers EX-7 and EX-8) is at successively lower temperatures and may be obtained using any cryogenic method known to the person skilled in the art, including cryogenic methods for producing refrigerants for liquefying natural gas. The ethane refrigerant for heat exchanges EX-7 and EX-8 may be replaced with ethylene. In addition, the refrigerant for each of the heat exchangers EX-2 to EX-8 may be replaced with a mixed refrigerant stream comprising at least two refrigerants selected from the group consisting of butanes, propanes, ethane and ethylene. The composition of the mixed refrigerant streams that are fed to the different heat exchangers may be adjusted to achieve the desired level of cooling.

Although the process of the invention has been described with respect to 7 cryogenic separation stages, the number of cryogenic separation stages may be increased or decreased depending predominantly on the desired level of carbon capture, energy efficiency targets and the capital cost requirements. At least 1 cryogenic separation stage is required, preferably, at least 2. Where there is a single cryogenic separation stage, ethane must be used as the refrigerant in the heat exchanger. However, a single cryogenic separation stage with ethane as refrigerant would be inefficient in terms of refrigeration power requirements. Accordingly, the number of cryogenic separation stages is preferably at least 2, more preferably 3 to 10, in particular, 5 to 8 in order to optimise the refrigeration power requirements (for the refrigerant compression). However, there is a limit on the lowest temperature in the last stage of separation, as the temperature must be maintained above a value where solid CO₂ will form. This typically occurs at a temperature of -56°C (the triple point for pure CO₂ is at 5.18 bar and at a temperature of 56.4°C) although the presence of H₂ may depress this freezing point.

The liquid CO₂ streams 9, 12, 15, 17, 20, 22 and 25 from the flash drums V-1, V-2, V-3, V-4, V-5, V-6, and V-7 respectively are at substantially the same pressure and are mixed to regenerate a combined stream 28 that is sent to a hold-up tank V-8. A liquid CO₂ stream 30 is withdrawn from the bottom of hold up tank V-8 and is sent to a CO₂ pump (P-1). The CO₂ pump P-1 increases the pressure of the CO₂ such that the CO₂ is in a dense phase (the transition to a dense phase occurs at approximately 80 barg) and then to the pipeline export pressure, of approximately 130 to 200 barg. It may be necessary to heat the dense phase CO₂ prior to it entering the CO₂ export pipeline, in order to meet pipeline design requirements, for example, a side stream from the dense phase CO₂ stream 31 may be used to cool the synthesis gas stream 5 in cross exchanger (EX-1) before being recombined with the dense phase CO₂.

Figure 3 illustrates a block flow diagram for a modified scheme that will be described by reference to both Figures 1 and 2. Figure 3 is identical to Figure 1 upstream of the CO₂ condensation plant. In the modified scheme of Figure 3, the enriched CO₂ retentate stream is passed through a series of 5 cryogenic separation stages that employ propane as refrigerant (with the cryogenic separation stages operated at the same temperatures as described for Figure 2). Thus, flash vessel V-5 is operated at a temperature of -28°C. The vapour stream that is withdrawn from flash vessel V-5 is sufficiently enriched in H₂ that it may be used as feed to a membrane separation unit that separates a H₂ enriched permeate stream from a CO₂ enriched retentate stream. Nitrogen may be added as sweep gas to the permeate stream. Depending upon the operating temperature of the hydrogen selective membrane, it may be necessary to warm the H₂ enriched vapour stream that is withdrawn from flash vessel V-5 prior to this stream entering the membrane separation unit. It may also be necessary to cool the CO₂ enriched retentate stream against a cold stream (for example, cold water) as described for the CO₂ enriched stream 5 of Figure 2. The CO₂ enriched stream is then passed through a further heat exchanger that employs propane as refrigerant and cools the CO₂ enriched stream to a temperature of -22°C thereby generating a two phase stream that is separated into a liquid CO₂ stream and a vapour stream in a further flash vessel. Thus, the presence of the membrane separation unit within the CO2 condensation plant allows the plant to operate using only propane as refrigerant. In addition, the scheme of Figure 3 reduces the number of cryogenic separation stages. The hydrogen permeate stream from the second membrane separation unit that is within the CO₂ condensation plant is mixed with the hydrogen from the first membrane separation unit prior to entering the Zinc Oxide beds. The resulting desulfurised stream is then blended with the hydrogen enriched stream from the final cryogenic separation stage of CO₂ condensation plant. The liquid CO₂ streams from the flash vessels of the CO₂ condensation plant (flash vessels V-1, V-2, V-3, V-4 and V-5 and the further flash vessel after the membrane separation unit) are combined and the combined liquid CO₂ stream is passed to the CO₂ pump, as described in Figure 2.

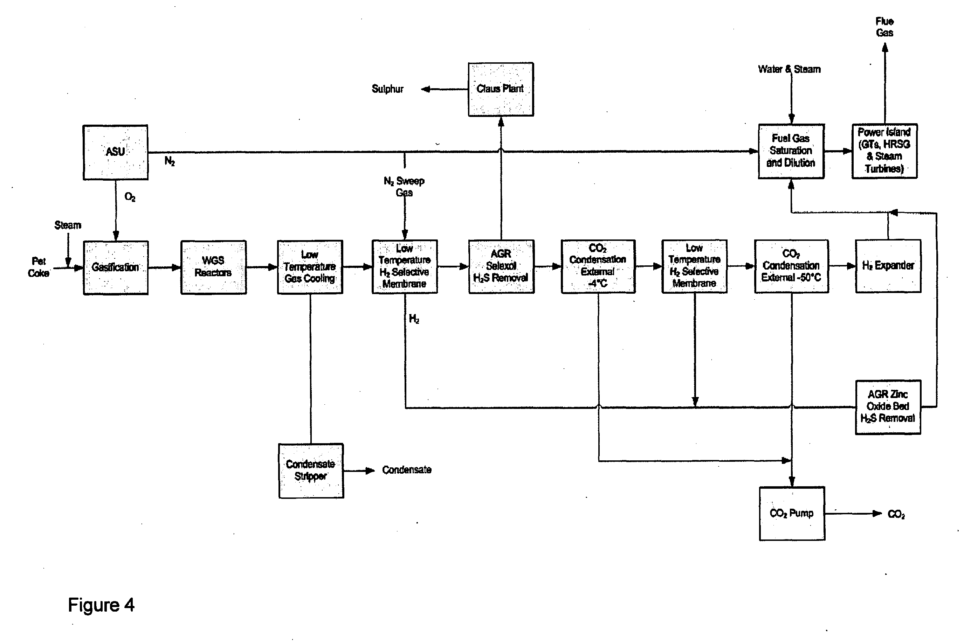

Figure 4 is identical to Figure 1 upstream of the CO₂ condensation plant. In the modified scheme of Figure 4, the enriched CO₂ stream is subjected to a first cryogenic separation stage that employs propane as refrigerant and cools the enriched CO₂ stream down to a temperature of -4°C thereby generating a two phase stream that is separated into a liquid CO₂ stream and a H₂ enriched vapour stream in a first flash vessel. The H₂ enriched vapour stream from this first cryogenic separation stage is passed to a membrane separation unit to separate a H₂ enriched permeate stream from a CO₂ enriched retentate stream. Nitrogen may be added as sweep gas to the permeate stream. Depending upon the operating temperature of the hydrogen selective membrane, it may be necessary to warm the H₂ enriched vapour stream prior to this stream entering the membrane separation unit. The CO₂ enriched retentate stream is then subjected to external refrigeration at a temperature of -50°C using ethane and/or ethylene as external refrigerant. The membrane separation unit of the CO₂ condensation plant reduces the refrigeration duties of the plant so that the condensation temperature after the second membrane separation unit is approximately -50°C. Accordingly, the scheme of Figure 3 reduces the number of cryogenic separation stages. The hydrogen enriched permeate stream from the membrane separation unit of the CO₂ condensation plant is mixed with the hydrogen enriched permeate stream from the first membrane separation unit prior to entering the zinc oxide beds. The resulting desulfuriser stream is then blended with the incondensable stream (hydrogen enriched stream from the final cryogenic separation stage of the CO₂ condensation plant). The liquid CO₂ streams that are withdrawn from the flash vessels of the CO₂ condensation plant are combined and the combined liquid CO₂ stream is pumped to the required transportation pressure as described for Figure 2.

## Claims

1. A process for separating hydrogen and carbon dioxide from a synthesis gas stream comprising carbon dioxide and hydrogen, said process comprising:
(A) feeding a shifted synthesis gas stream at a pressure of at least 50 bar gauge to at least one membrane separator unit that is provided with membrane having a selectivity for H₂ over CO₂ of greater than 16 and withdrawing a hydrogen enriched permeate stream having a CO₂ content of less than 10 mole % and a carbon dioxide enriched retentate stream having a CO₂ content of at least 63 mole % CO₂, preferably, at least 70 mole % CO₂ from the membrane separator unit;
(B) feeding the carbon dioxide enriched retentate stream to a carbon dioxide condensation plant where the retentate stream is cooled to condense out liquid CO₂ by:
(i) passing the carbon dioxide enriched retentate stream through a heat exchanger where the retentate stream is cooled against an external refrigerant to below its dew point thereby forming a cooled stream comprising a liquid phase and a vapour phase wherein the liquid phase comprises substantially pure liquid CO₂ and the vapour phase is enriched in hydrogen compared with the retentate stream;
(ii) passing the two-phase stream from step (i) to a separator vessel wherein the liquid phase is separated from the vapour phase and withdrawing a liquid CO₂ stream and a hydrogen enriched vapour stream from the separator vessel;
(iii) if the CO₂ content of the hydrogen enriched vapour stream is greater than 10 mole %, passing the vapour stream through a further heat exchanger where the vapour stream is cooled against a further external refrigerant to below its dew point thereby forming a further cooled stream comprising a liquid phase and a vapour phase wherein the liquid phase comprises substantially pure liquid CO₂ and the vapour phase is further enriched in hydrogen compared with the retentate stream;
(iv) passing the two-phase stream from step (iii) to a further separator vessel wherein the liquid phase is separated from the vapour phase and withdrawing a liquid CO₂ stream and a hydrogen enriched vapour stream from the further separator vessel; and
(vi) if necessary, repeating steps (iii) to (iv) until the CO₂ content of the hydrogen enriched vapour stream that is withdrawn from the further separator vessel is less than 10 mole %;
(C) passing the hydrogen enriched vapour stream having a CO₂ content of less than 10 mole % that is formed in step (B) and/or the hydrogen enriched permeate stream having a CO₂ content of less than 10 mole % that is formed in step (A) as a fuel feed stream to the combustor of at least one gas turbine of a power plant at a pressure above the operating pressure of the gas turbine(s) for the production of electricity; and
(D) sequestering the liquid CO₂ stream(s) formed in step (B).

2. A process as claimed in Claim 1 wherein the shifted synthesis gas stream is fed to the membrane separation unit(s) at a temperature in the range of 0 to 50°C, preferably, 20 to 40°C and the membrane separation unit is provided with a hydrogen selective membrane that is capable of operating at the temperature of the shifted synthesis gas feed stream.

3. A process as claimed in Claim 1 wherein the shifted synthesis gas stream is fed to the membrane separator unit(s) at a temperature in the range of 75 to 400°C, preferably, 100 to 300°C and wherein the CO₂ enriched retentate stream that is removed from the membrane separation unit(s) is cooled downstream of the membrane separation unit(s) before the retentate stream enters the CO₂ condensation plant.

4. A process as claimed in Claim 3 wherein the shifted synthesis gas stream that is fed to the membrane separator unit(s) comprises steam and wherein a condensate comprising water is separated from the cooled CO₂ enriched retentate stream before the retentate stream enters the CO₂ condensation plant.

5. A process as claimed in Claim 3 wherein, prior to being fed to the membrane separation unit(s), the shifted synthesis gas stream is cooled to below its dew point thereby forming a condensate that is separated from the shifted synthesis gas stream and the shifted synthesis gas stream is subsequently reheated to a temperature in the range of 75 to 400°C, preferably, 100 to 300°C.

6. A process as claimed in any one of the preceding claims wherein the shifted synthesis gas stream is fed to the membrane separator unit(s) at a pressure of at least 60 barg.

7. A process as claimed in any one of the preceding claims wherein the H₂ enriched retentate stream is withdrawn from the membrane separation unit(s) at a pressure that is above the operating pressure of the gas turbine(s) of the power plant.

8. A process as claimed in any one of the preceding claims wherein the hydrogen selective membrane that is employed in the membrane separator unit(s) has a H₂ selectivity (over CO₂) of greater than 20, preferably, greater than 40.

9. A process as claimed in any one of the preceding claims wherein the CO₂ content of the hydrogen enriched permeate stream is less than 2 mole%.

10. A process as claimed in any one of the preceding claims wherein the CO₂ content of the CO₂ enriched retentate stream is in the range of 70 to 85 mole%.

11. A process as claimed in any one of the preceding claims wherein the CO₂ enriched retentate stream is passed to a pre-cooling heat exchanger of the CO₂ condensation plant where the retentate stream is pre-cooled to a temperature in the range of 0 to 10°C.

12. A process as claimed in any one of the preceding claims wherein the CO₂ condensation plant comprises a plurality of cryogenic separation stages that are arranged in series wherein each cryogenic separation stage comprises a heat exchanger and a gas-liquid separation vessel and the CO₂ enriched retentate stream is fed to the first cryogenic separation stage in the series.

13. A process as claimed in Claim 12 wherein the CO₂ condensation plant comprises 4 to 8 cryogenic separation stages arranged in series.

14. A process as claimed in any one of the preceding claims wherein the "external refrigerant" is selected from propane, ethane, ethylene, ammonia, hydrochlorofluorocarbons (HCFC's) and mixed refrigerants comprising at least two refrigerants selected from the group consisting of butanes, propanes, ethane, and ethylene.

15. A process as claimed in any one of Claims 12 to 14 wherein the H₂ enriched vapour stream that is withdrawn from the separator vessel of an intermediate cryogenic separation stage has a H₂ content of at least 40 mole %, preferably, at least 50 mole % and this H₂ enriched vapour stream is passed to a membrane separation unit of the CO₂ condensation plant where a hydrogen selective membrane is used to separate a hydrogen enriched permeate stream from a CO₂ enriched retentate stream; and the CO₂ enriched retentate stream from the membrane separation unit of the CO₂ condensation plant is used as feed to a further cryogenic separation stage of the CO₂ condensation plant.

16. A process as claimed in any one of claims 12 to 15 wherein the hydrogen enriched vapour stream (non-condensable stream) from the final cryogenic separation stage of the CO₂ condensation plant comprises at least 90 mole % hydrogen, preferably, at least 95 % hydrogen, more preferably, at least 98 mole % hydrogen, in particular, at least 99 mole % hydrogen.
